# EUROPEAN PATENT APPLICATION

(11) **EP 4 175 199 A1**
(43) Date of publication of application: **03.05.2023**
(21) Application number: 22203809.3
(22) Date of filing: 26.10.2022
(51) Int. Cl.: H04B 10/112, H01Q 3/00, H04B 10/118

(54) **POINTING UNITS AND METHODS OF OPERATING POINTING UNITS**

(30) Priority: 29.10.2021 GB 202115614
(71) Applicant: Airbus SAS, 31700 Blagnac (FR)
(72) Inventor: QUINTANA SANCHEZ, Crisanto, Bristol, BS34 7PA (GB); ERRY, Gavin, Bristol, BS34 7PA (GB); THUEUX, Yoann, Bristol, BS34 7PA (GB)
(74) Representative: EIP

(57) **Abstract**

A pointing unit (100) for use with a free space optical (FSO) communications terminal (105) is disclosed. The pointing unit (100) comprises an optical arrangement (101) of one or more optically transmissive steering elements (101a, 101b). The steering elements (101a, 101b) are arranged in an optical path of an incident beam (107) entering the optical arrangement (100), and the orientation of at least one element (101a, 101b), and the refractive index of at least one element (101a, 101b), are controllable to steer a beam (107b) towards a target (110).

## Description

### Technical Field

The present invention relates to pointing units and methods of operating pointing units, and more specifically to pointing units and methods of operating pointing units for use with free space optical communications terminals.

### Background

Free space optical (FSO) communications uses light propagating in free space to transmit data. In the context of FSO communications, 'free space' refers to, for example, air, space, vacuum, or similar and is in contrast with communications via solids such as a fiber-optic cable. FSO communications can be useful for example in cases where communication via physical connections, such as fiber optic cables or other data cables, is impractical. One such case is, for example, communications between an aircraft such as a drone and a ground-based terminal.

FSO communications ordinarily rely on direct line of sight between transmitter and receiver and so rely on directing an optical beam between FSO communication nodes. This demands pointing units which can steer a beam, received from another node, into a receiver module, or steer a transmitted beam towards a target node.

FSO communications can offer higher data rates and improved security as compared to other wireless communication techniques. For example, FSO communications can achieve higher data rates, and can be less susceptible to jamming and interception compared to radio frequency (RF) communications.

### Summary

According to a first aspect of the present invention, there is provided a pointing unit for use with a free space optical communications terminal, the pointing unit comprising:
an optical arrangement comprising one or more optically transmissive steering elements arranged in an optical path of an incident beam entering the optical arrangement,
wherein, the optical arrangement is configured so that an orientation of at least one element and a refractive index of at least one element are controllable to steer a beam towards a target.

In examples, in such a pointing unit the steering element having a controllable orientation may comprise an electro-optic element. In other examples, the steering element having a controllable orientation may comprise an acousto-optic element, or comprise a material that has a refractive index that can be varied in other ways.

In examples, the steering element comprises an optical element having a fixed refractive index or effective refractive index. The refractive index may be fixed for a given wavelength of light.

In examples, the steering element is monolithic, wherein the optical element forms a first layer and the electro-optic element forms a second layer. In examples, the steering element may comprise monolithically fabricated layers, and in other examples the layers may be attached adhesively or mechanically fastened to one another.

In examples, the fixed refractive index or effective refractive index of the optical element is higher than an average refractive index of the electro-optic element, such that the optical element results in a larger steering angle than the electro-optic element.

In examples, the steering element is movably mounted in a support member. In other examples, the steering element is movably mounted in a first support member which is further movably mounted in a second support member.

In examples, the support member comprises electrical contacts arranged to couple to the electro-optic element. In some examples, the electrical contacts are arranged to couple to the entire steering element.

In examples, the electro-optic element comprises electrical contacts arranged to move with the electro-optic element and remain in electrical contact with the support electrical contacts during movement of the electro-optic element relative to the support member.

In examples, the optical arrangement has a principal axis that is substantially parallel to an input direction of the incident beam, wherein the orientation of the one or more optically transmissive steering elements is controllable by rotation in a plane that is substantially perpendicular to the principle axis.

In examples, the optical arrangement comprises at least a first steering element and a second steering element, each steering element being controllable to vary the orientation thereof relative to the pointing unit.

In examples, at least one of the first and second steering elements comprises an optical element having a fixed refractive index or effective refractive index and an electro-optic element. In some examples, each of the first and second steering elements comprises an optical element having a fixed refractive index or effective refractive index and an electro-optic element.

In examples, coarse steering of the beam is achieved by varying the orientation of at least one steering element of the optical arrangement.

In examples, fine steering of the beam is achieved by varying the refractive index of at least one steering element of the optical arrangement.

According to a second aspect of the invention, there is provided a pointing unit for use with a free space optical communications terminal, the pointing unit comprising:
an optical arrangement to steer an incident beam towards a target, the optical arrangement comprising at least a first steering element and a second steering element, at least one of the steering elements comprising an optical element having a fixed refractive index or effective refractive index and an electro-optic element having a refractive index that can be varied by varying an electric field applied thereto, each steering element being movably mounted in a respective support member and arranged in an optical path of an incident beam entering the optical arrangement in a forward direction; and
a controller arranged to vary an orientation of each steering element relative to its respective support member to perform coarse steering of the incident beam and to vary an electric field applied to the or each electro-optic element, to vary the respective refractive index or indices thereof, to perform fine steering of the incident beam.

In examples, the first and second optical steering elements are arranged as a Risley prism pair.

In examples, the pointing unit comprises a controller to control an orientation of at least one element and a refractive index of at least one element to steer a beam towards a target.

In examples, the pointing unit comprises a guidance unit coupled to the controller and responsive to an optical signal received via the optical arrangement to cause the controller to vary an orientation of at least one element and/or a refractive index of at least one element to steer the incident beam towards the target.

In examples, the optical arrangement comprises a beam expander at an optical terminal, arranged to expand the beam diameter in the transmit direction and reduce the beam diameter in the receive direction.

In examples, the beam expander comprises a telescope arrangement. In other examples, the beam expander comprises a prismatic arrangement.

In a third aspect, there is provided a vehicle equipped with the pointing unit according to the second aspect.

In examples, the vehicle is an aircraft.

In a fourth aspect, there is provided a method of steering a beam towards a target, comprising: determining a steering direction of a beam; and controlling an optical arrangement to steer the beam, comprising controlling an orientation of at least one element of the optical arrangement and a refractive index of at least one element of the optical arrangement to steer a beam towards a target.

Further features and advantages of the invention will become apparent from the following description of preferred embodiments of the invention, given by way of example only, which is made with reference to the accompanying drawings.

### Brief Description of the Drawings

Figure 1 is a schematic diagram of an exemplary free space optical communications node comprising a pointing unit and terminal.
Figure 2 is a schematic diagram of an exemplary steering element for use in a pointing unit.
Figures 3a, 3b and 3c are schematic diagrams of examples of steering elements and various arrangements of electrical contacts for steering elements.
Figures 4a, 4b and 4c are schematic diagrams of examples of various cross-sections of a steering element, and various arrangements of electrical contacts for a steering element.
Figure 5 is a schematic diagram of an exemplary steering element housed in a slip ring architecture and rotational mount.
Figures 6a and 6b are schematic diagrams of exemplary optical arrangements of steering elements arranged in a Risley topology.
Figure 7 is a schematic diagram of an exemplary steering element comprising two portions, an electro-optic portion and an optical element.
Figures 8a and 8b are schematic diagrams of exemplary steering elements comprising two portions, and various positions of electrical contacts applied thereto.
Figure 9 is a schematic diagram of an exemplary Risley topology comprising four steering elements.
Figure 10 is an example of an aircraft on which there are mounted multiple FSO communications nodes according to examples herein.
Figure 11 is a flow chart of a process for steering a beam using a steering unit according to examples herein.

### Detailed Description

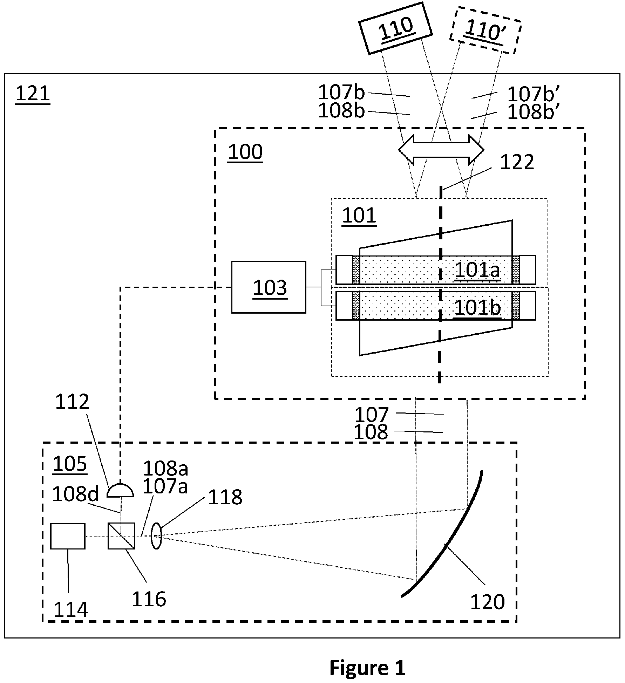

Figure 1 shows an exemplary free space optical (FSO) communications node 121 comprising a pointing unit 100 and a terminal 105.

The terminal 105 is arranged to produce an optical output beam 107, 107a, 107b, and receive a return beam 108, 108a, 108b, for use in an optical communications scheme. The terminal 105 comprises an input/output unit 114, the output portion of the input/output unit 114 comprising a laser which emits an output beam 107a. There is a beam expanding portion, comprising a lens 118 and concave mirror 120. The output beam 107a enters the lens 118 and is expanded to become a beam 107 which has a desired diameter for transmission. The concave mirror 120 collimates the beam 107 and directs it to the pointing unit 100.

The terminal 105 may be arranged in various other configurations. For example, variants that do not require beam diameter adjustment may dispense with the beam expanding portion. Additionally, or alternatively, the concave mirror 120 may be dispensed with and/or replaced by a transmissive collimating element, such as a lens, in variants in which the terminal 105 and the pointing unit 100 are arranged broadly in-line with one another. Whether reflective or transmissive optics are deployed in the terminal 105 depends on shape and space requirements of the overall FSO communications node 121, for example as determined by where the node is to be mounted, as will be appreciated by those skilled in the art.

The pointing unit 100 comprises an optical arrangement 101 comprising, in this example, a pair of steering elements 101a, 101b, aligned along an optical axis 122 and operated by a controller 103, which controls actuators (not shown) for varying orientations of the steering elements and electrical circuitry (not shown) for varying electrical fields applied to the steering elements, in a manner to be described. The beam 107 is steered by the pointing unit and transmitted as a steered beam 107b towards a target 110. If the target moves to a new position 110', the controller 103 arranges the steering elements 101a, 101b to steer the beam 107 to the target at its new position as a steered beam 107b'.

When receiving the return beam, the pointing unit 100 receives a beam 108b from the target 110, whereupon the pointing unit 100 steers the beam 108b and transmits it to the terminal 105 as a steered beam 108. The beam expanding portion acts as a beam reducer when receiving the steered beam 108, reducing it to a beam 108a of suitable diameter to be received at the input portion of the input/output unit 114. A beam splitter 116 reflects a portion 108d of the beam 108a to a quadrant tracking guidance unit 112. If the target moves to a new position 110', the pointing unit receives a beam 108b' and the quadrant tracking guidance unit 112 detects a change in the position of beam 108d. As a result of this change, the quadrant tracking guidance unit 112 communicates to the controller 103 the necessary adjustments needed of the steering elements 101a, 101b, such that the input portion of the input/output unit continues to receive the beam 108a.

The controller 103 in examples herein may be an embedded hardware controller operating on the basis of programmed instructions for performing guidance. Such a controller is sufficiently responsive to changes of position of the FSO communications node 121 and/or the target 110 to actuate the optical arrangement 101, and ensure efficient communications, for example, so as to limit the amount of retransmissions that are required in the event of temporary misalignment between the FSO communications node 121 and the target 110. The controller 103 may instead deploy other arrangements of hardware and/or software (e.g. operating on a programmed processor) that can provide sufficient responsiveness to perform the required guidance and facilitate efficient communications.

In practice, when the FSO communications node 121 is in two-way communications with the target 110, the output beam 107 and the return beam 108 traverse substantially the same optical path, and hence the various steering and guiding arrangements in the FSO communications node 121 serve to guide both output and return beams concurrently.

When producing the output beam 107a, the output portion of the input/output unit 114 is configured to encode data onto the output beam 107a. For example, the output portion of the input/output unit 114 may be configured to modulate the output beam 107a to encode bits of data therein. The data encoded onto the output beam 107a may comprise information to be communicated to the target 110.

The steering elements 101a, 101b are, in this example, wedge prisms. In the present example, the optical arrangement 101 of the two steering elements 101a, 101b, with the optical axis 122 substantially parallel to the direction of the input beam 107, constitutes a Risley topology. A Risley topology is a common optical arrangement for beam steering and can be realised with two or more steering elements. More generally, in other examples, the optical arrangement 101 comprises at least one steering element, and may comprise two or more steering elements, as will be described. The steering elements may, in other examples, be other optical elements capable of steering a beam, such as transmission gratings or meta-surface lenses and may be configured in arrangements other than a Risley topology.

To steer the beam 107, the controller 103 varies the orientations of the steering elements 101a, 101b by rotating them in a plane perpendicular to the optical axis 122. This acts to change the angle of incidence of the beam 107 with surfaces of the steering elements 101a, 101b, and thereby change the angle by which the beam 107b is steered. The steering elements 101a, 101b can be rotated independently from one another. Rotation of the steering elements 101a, 101b by the controller 103 allows for coarse steering of the beam 107, whereby the beam can be steered through a relatively wide range, for example being steerable through a cone with an opening angle of 90 degrees. The total range the pointing unit 100 can steer over is known as its field-of-regard (FoR), and will vary according to the optical arrangement that is employed. While in this example the steering elements 101, 101b are rotated in a plane substantially perpendicular to the optical axis 122, these orientational adjustments may, in other examples, be translations, rotations and/or combinations thereof.

The controller 103 is also arranged to vary electric fields applied across the steering elements 101a, 101b. In general, a material placed under an electric field will exhibit an electro-optical Kerr effect response, thereby altering the material's refractive index. Some materials will additionally exhibit a Pockels effect response, which also alters the material's refractive index. In this example, the steering elements 101a, 101b comprise a layer of electro-optic crystal which exhibits a particularly strong Pockels effect refractive index change, in response to an electric field. In such an electro-optic crystal or similar, the Pockels effect refractive index change is large compared to any relatively smaller change of refractive index due to the Kerr effect. By placing electric fields across the steering elements 101a, 101b, the controller can vary the refractive index of each steering element. This allows for fine steering of the beam 107b, wherein it can be varied, for example, by +/- 2 degrees according to the present example. Other degrees of fine steering angle can be attained, of course, by using different electro-optic materials and different levels of electric field according to examples herein. In any event, the combination of coarse steering due to reorientation of the steering elements and fine steering due to variations in refractive index contribute to a resultant, overall or composite FoR for examples herein.

Providing for both fine and coarse steering control within one optical arrangement 101 allows for the spatial footprint of the pointing unit 100 to be reduced in comparison with conventional pointing units, for example, in which fine and coarse steering are arranged separately, often with a beam expanding portion between them. Such conventional pointing units can require additional relay optics if using reflective steering elements, which further adds to the weight and cost of the pointing unit.

Figure 1 presents one possible pointing unit 100 comprising an optical arrangement 101 of steering elements 101a, 101b operated by a controller 103 to realise both fine and coarse steering control. The following figures illustrate other steering element(s) and arrangements suitable for use in examples of the present invention.

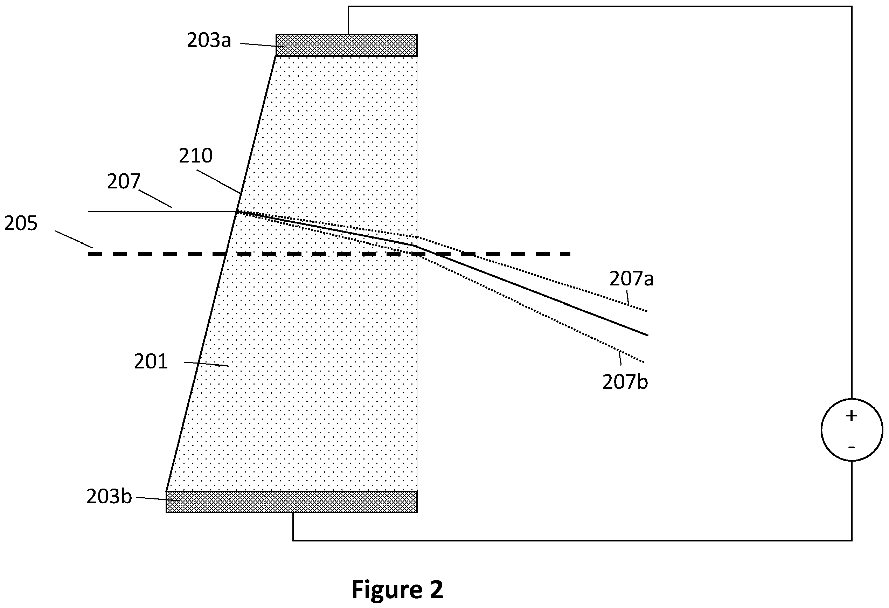

Figure 2 illustrates an example of a steering element, displayed in side view, comprising an element of electro-optic material 201 placed between electrical contacts 203a, 203b, such that an electric field can be applied across the electro-optic element 201. Such a steering element may be deployed alone or in combination with other elements in an optical arrangement according to examples herein. In this example, the electro-optic element 201 is a wedge prism. In use, a beam 207 is incident on a surface 210 of the prism, parallel to an optical axis 205 of the prism, in this example from the left-hand side towards the left hand surface 210, where it undergoes refraction and hence steering, as indicated by the illustrative beam path in the Figure. According to examples, the steering element is further housed in a support structure (not illustrated) which allows for its reorientation, for example, rotation in a plane perpendicular to the optical axis 205, for example, about the optical axis.

The angle of refraction is determined by the refractive index of the electro-optic prism 201. The prism 201, in this example, is of substantially uniform refractive index. In other examples, the refractive index may have an arbitrary refractive index profile in which the refractive index varies along some or multiple dimensions. In such cases, the beam may be steered by the prism at an angle which would correspond with the beam being refracted by a prism of some effective bulk refractive index, even though the element in that case has a non-uniform refractive index.

The angle of steering is dependent upon the orientation of the prism 201 with the incident beam 207. By reorienting the prism, for example by rotation in a plane perpendicular to the plane of the Figure, the beam 207 is incident with the prism at a different angle and can therefore be steered at a different angle. As has been described, reorientation of the steering element forms the basis for the coarse steering capabilities of the pointing unit.

In this example, the electro-optic material forming the prism 201 is an electro-optic crystal. Electro-optic crystals are capable of steering angles of around 1-2 degrees at voltages of around 1-2 kV. Other materials may be suitable, such as liquid crystals, and the prism may include other structures and/or materials required to house the electro-optic material for structural, protective, safety or functional reasons. Such variations afford different degrees of fine steering capability.

For electro-optic materials, an electric field is applied across the prism 201 by the electrical contacts 203a, 203b. In this example, the electrical contacts 203a, 203b span the entirety of top and bottom surfaces of the prism 201, as illustrated in the Figure. Thus, the electric field generated is perpendicular to the optical axis 205 of the prism 201. Other alternatives, where the electrical contacts only span partial portions of the prism and thereby only apply an electric field to a partial region of the prism, are envisioned and discussed hereafter. The electrical contacts 203a, 203b are further arranged to move with the electro-optic element.

The applied electric field modifies the refractive index of the prism 201, the strength of modification for a given material being dependent on the strength of the electric field applied across the material. This further shifts the beam 207. By modifying the strength of the electric field applied across the prism 201, the beam can be moved between two angles, an angle achieved at maximum field strength and an angle achieved when no field is applied, these two angles being indicated in the Figure by beams 270a, 207b. This range of angles is typically small relative to the angles achieved through reorientation of the prism 201, due to the shape of the prism 201, and provides the fine steering capabilities of the steering element and hence the pointing unit 100.

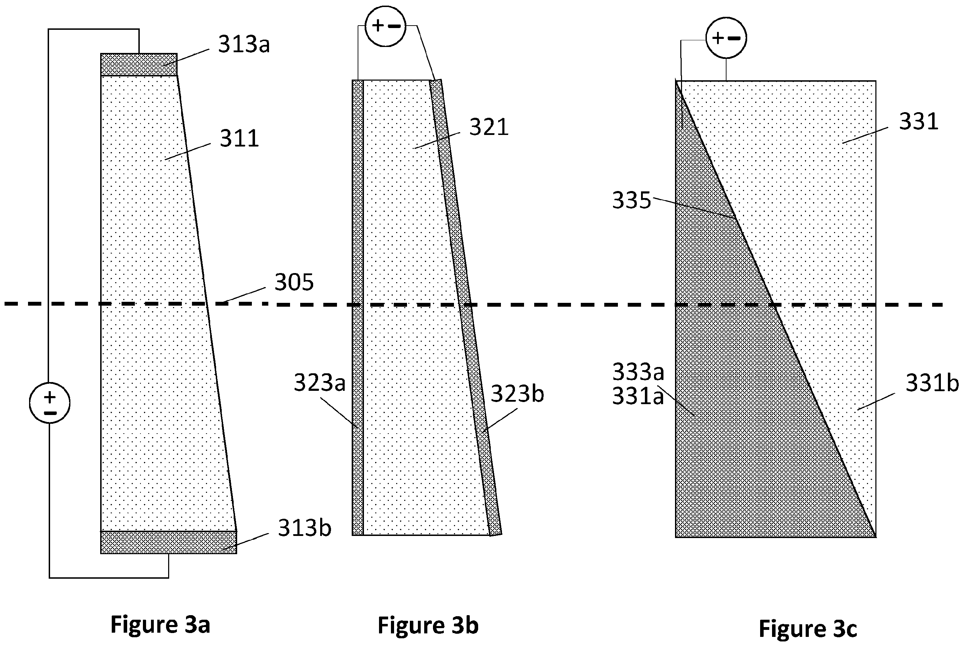

Figures 3a-3c illustrate, from side views, examples of three steering elements comprising electro-optic elements with various arrangements of electrical contacts and cross-sectional profiles of the electro-optic elements. An optical axis 305 is also shown through each steering element. Each steering element may be deployed alone or in combination with other elements in an optical arrangement 100 according to examples herein.

In Figure 3a, electrical contacts 313a, 313b are arranged as in Figure 2, on top and bottom surfaces of the electro-optic element 311, with them spanning a direction substantially parallel to the optical axis 305, such that an electric field is applied perpendicular to the optical axis 305. Here the electro-optic element 311 is a wedge prism.

In Figure 3b, contacts 323a, 323b are placed on leading and following surfaces of the electro-optic element 321, the electro-optic element 321 being a wedge prism in this example. The contacts 323a, 323b are placed in planes substantially perpendicular to the optical axis 305, such that an applied electric field is substantially parallel to the optical axis 305. In such a case the contacts 323a, 323b are formed from an optically transparent conductor such as indium tin oxide (ITO), thereby allowing an incident beam to traverse the element with negligible attenuation (reflection, scattering or absorption) due to the contacts 323a, 323b.

In Figure 3c, the electro-optic element 331 is rectangular in cross-section with the contacts 333a applied to the near and far sides (far contact not illustrated), as depicted in side view. Here the contacts 333a are triangular in profile and do not span the entire surface of the rectangular electro-optic element 331, such that an electric field is only applied to a (triangular) portion 331a of the electro-optic element 331 (into the page). This modifies the refractive index in the portion 331a of the electro-optic element 331 where the electric field is applied, but not (or at least far less so) in the remaining portion 331b. The boundary 335 between these portions 331a, 331b exhibits a refractive index contrast which gives rise to a refraction of a beam incident upon it.

It will be clear to those skilled in the art that the electrical contacts can have any profile which might be desirable for beam steering purposes, without demanding the electro-optic material adopt the same profile. This may be advantageous where manufacturing contacts of arbitrary geometrical complexity is cheaper and/or easier to manufacture and/or structurally more robust than manufacturing an equivalent electro-optic element.

Additionally, there may be multiple such electrical contacts applied to an electro-optic element to apply electric fields to multiple portions of the electro-optic material. Multiple portions of applied field provides multiple refractive boundaries within the electro-optic element and thus multiple steering portions of the electro-optic element. These may also be independently addressable such that each steering portion can be turned on, off, or varied in steering strength. Alternatively, to reduce the complexity of the required electronics, electrical contacts and respective steering portions may be addressed simultaneously. In such a case they may be designed such that they realise different steering angles, which may be through selection of the geometry of the respective contact and thus the refractive boundary it forms, and/or by weakening the electric field produced by selection of the material forming the contact or by physically separating the contacts by different amounts across the electro-optic element.

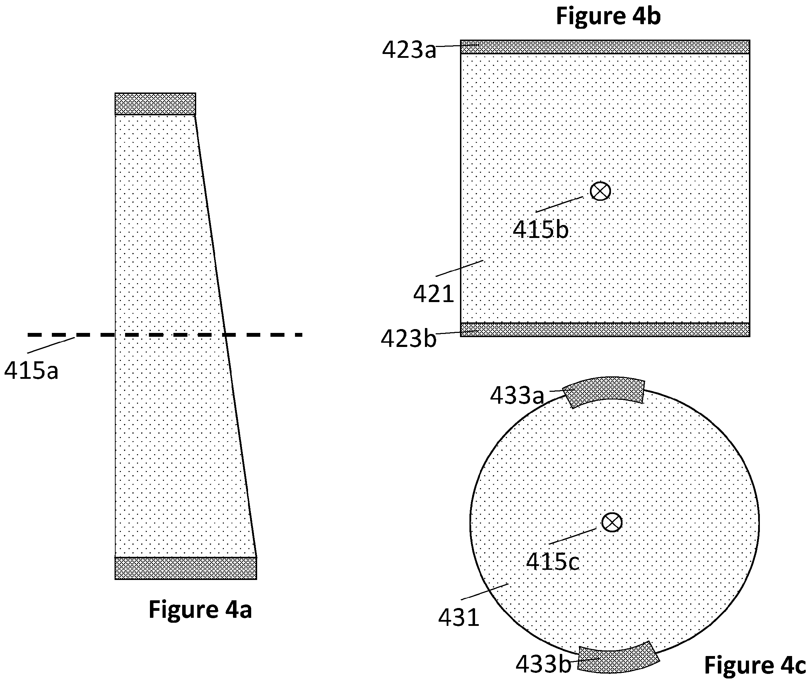

Figure 4a illustrates an exemplary steering element in side view, with an optical axis 415a illustrated from left to right, and two other exemplary steering elements, in Figure 4b and Figure 4c, in leading surface, face-on view, with optical axes 415b, 415c depicted into the page. Such steering elements may be deployed alone or in combination with other elements in an optical arrangement 100 according to examples herein.

In Figure 4b, the steering element is of square cross-section, with electrical contacts 423a, 423b spanning the top and bottom edges of the electro-optic element 421. In Figure 4c, the steering element is circular in cross-section, with electrical contacts 433a, 433b spanning only a portion of the circumference of the electro-optic element 431.

In other examples, the steering elements may be of arbitrary cross-sectional shape, and in some examples the electrical contacts may span the entire perimeter of the steering element whereas in others only portions of the steering element are spanned by electrical contact. In further examples, there may be multiple electrical contacts arranged such that a respective electric field can be applied in a variable direction relative to the orientation of the steering element with the incident beam. This may be useful, for example, where the incident beam is polarised and the steering element comprises a birefringent material.

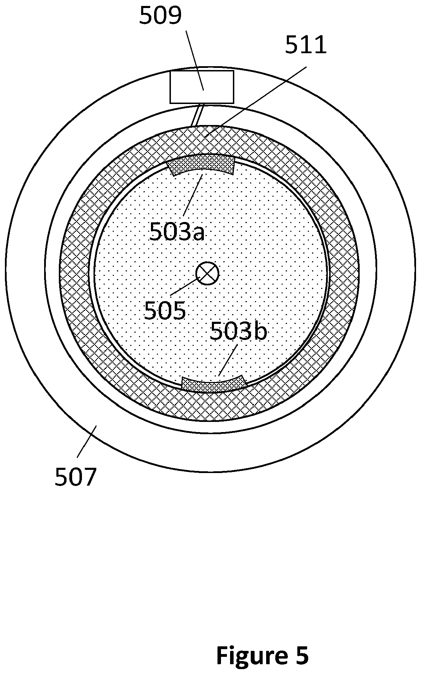

Figure 5 shows the steering element of Figure 4c housed in a rotation mount 507, which allows the steering element to be rotated in a plane perpendicular to the optical axis 505. Power is supplied, from a source (not shown) external to the steering element, to the electrical contacts 503a, 503b via a slip ring arrangement 509, 511, which allows the steering element to be rotated freely within the rotation mount 507 whilst still retaining electrical contact. In some examples, the slip ring arrangement 509, 511 may comprise separate slip rings responsible for providing power to their respective electrical contacts 503a, 503b. In other examples, one slip ring is used to provide power to an electronic module attached to the steering element, which distributes power as necessary to the electrical contacts. In further examples, power may be supplied through the slip ring(s) at low voltage and boosted up using an electronic module attached to the steering element.

Examples herein benefit from this kind of rotatable mount arrangement, whereby an electric field can be applied across an electro-optical prism when the prism has been actuated to different orientations. Indeed, such a rotatable mount arrangement provides that an electric field may be applied and/or varied while the orientation of the prism is being varied. High accuracy and fast-response examples may benefit from a continual ability to vary electric field and orientation at the same time.

In other examples, the steering element may be movably mounted to other support members, such as a motorized pitch/yaw platform or three-axis stage. A rotation mount may itself be movably mounted to enable further reorientation beyond that of the plane afforded by the rotation of the mount. In general, the range of angles through which a beam can be coarsely steered by a steering element is influenced by how the steering element is reorientable. The range of angles through which it is necessary to be able to coarsely steer the beam is influenced by the geometry of the communications scheme in which the pointing unit will be deployed. For example, the terminal and target may be coplanar, and so the beam only needs to be steered in one dimension, along a line. If two-dimensional steering is required, then a housing which allows for reorientation of a steering element in additional dimensions may be used. In general, the support member is chosen to allow for the total range of orientational freedom required of that steering element.

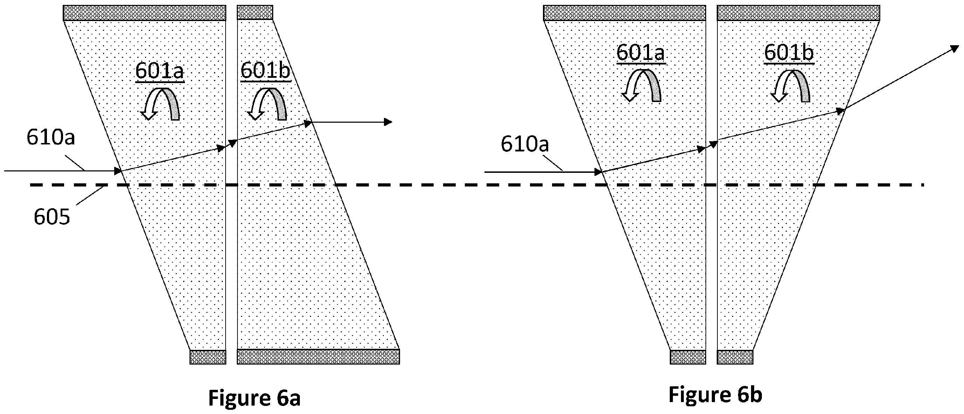

Figure 6a and Figure 6b show exemplary optical arrangements each comprising a pair of steering elements 601a, 601b arranged in a Risley topology. In this example the steering elements are wedge prisms. The two steering elements 601a, 601b are arranged substantially parallel to one another, with both centres substantially aligned along a common optical axis 605, and both being independently rotatable, about their centres, in a plane perpendicular to said optical axis 605. This allows a beam 610a to be steered to an arbitrary point within the bounds of an annulus, the annulus being defined by the optical and geometric properties of the constituent wedge prisms 601a, 601b. Figure 6a shows the orientation of the prisms 601a, 601b achieving minimum steering and Figure 6b shows the orientations of the prisms 601a, 601b achieving maximum steering.

Within a two-steering element Risley topology such as in Figure 6, there is typically a boresight blind spot, which gives rise to a minimum steering of the beam. In examples where three or more steering elements are arranged in a Risley topology, this blind spot can be avoided and instead the total area of a circle is accessible by the steered beam, where the circumference of the circle relates to the maximum steering angle achieved by the individual steering elements. In examples with disparate steering elements, the FoR may instead be elliptical or some other shape, which may be advantageous depending on the geometry of the communications scheme.

Figures 2 to 6 illustrate examples of steering elements comprising substantially of one electro-optic element, and configurations thereof. However, the performance of the pointing unit, such as the FoR, may be enhanced through augmenting the steering element with additional optical elements. Such optical elements may include, but are not limited to, optical prisms, lenses, transmission and diffraction gratings, meta-surface elements, spatial light modulators, polarisers, waveplates, bandpass, low, or high-pass filters, neutral density filters, and diffusers. We will presently discuss further examples of steering elements for use in pointing units.

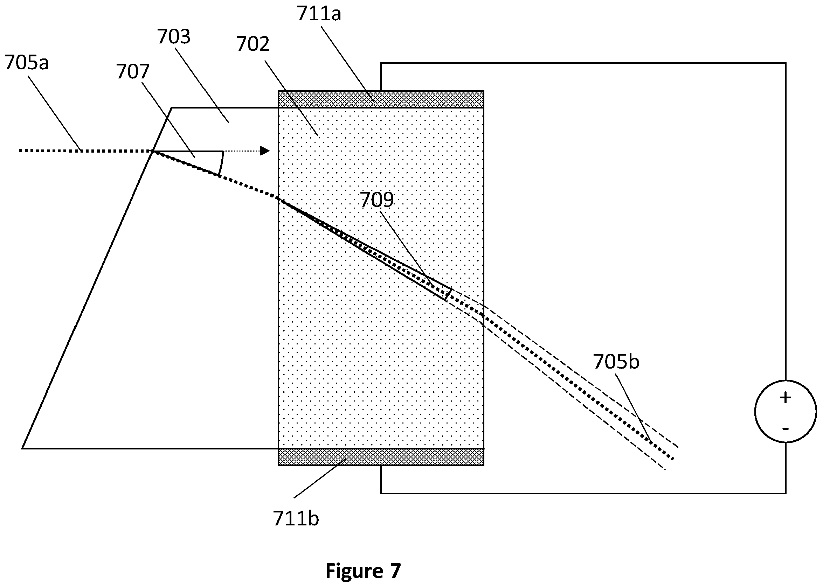

In Figure 7 there is a side view of an exemplary steering element comprising a first portion, the first portion being an electro-optic element 702, and a second portion, the second portion being an optical element 703 of relatively high-index glass, the optical element 703 in this example being a wedge prism. The electro-optic element 702 is placed between electrical contacts 711a, 711b and the overall steering element is housed within a support structure (not shown in this instance).

In this example, the two elements 702, 703 are monolithic and form a first and a second layer of the steering element, though in other examples they may not be in physical contact but still housed by the same support structure, such that they undergo the same re-orientations.

In general, the layers may be attached together through means not limited to adhesives, such as optically clear epoxy, or mechanically fastened together by, for example, the housing. Alternatively, they may be monolithically fabricated through methods such as chemical vapor deposition or any appropriate fabrication method.

The optical element 703 of Figure 7 achieves a first beam steering angle 707, or coarse steering. As the optical element 703 is formed from a relatively high-index glass, which has a larger refractive index than the electro-optic crystal forming the electro-optic element 702, the first beam steering angle 707 is typically increased compared to an equivalently shaped wedge prism formed from electro-optic crystal, such as in the exemplary steering element of Figure 2. The electro-optic element 702 performs fine steering as described earlier, allowing the steered beam 705b to be adjusted within a fine range of angles 709.

The increased refractive index at the outer boundary of the steering element decreases the angle of the wedge prism required to attain a desired steering angle. Reducing the angle of the required wedge prism reduces its size, and therefore weight. This in turn reduces the weight of the pointing unit and FSO communications node, which is advantageous when the FSO communications node or pointing unit is to be mounted into a vehicle, for example.

When at least one or multiple such enhanced steering elements are arranged in a Risley configuration, for example the arrangement shown in Figures 6a and 6b, this increases the total steering angle achievable by the pointing unit, and hence its FoR. This may reduce the number of pointing units or FSO communications nodes required to afford a sufficiently large total FoR, such as a vehicle equipped with the pointing unit or FSO communications node requiring 360-degree communications vision. This may provide advantages including, but not limited to, lower total apparatus cost, reduced weight, reduced power consumption or reduced vehicle fuel consumption.

Whilst the optical element 703 forming the second layer presented in Figure 7 is, in this example, a wedge prism, in other examples it may be any other optical element which gives rise to a beam steering. This includes optical elements which function through diffraction rather than refraction. These could include a transmission grating, whereby steering arises from the diffraction of the incident beam into a given diffraction order. In the case of a blazed transmission grating, optical power into the desired diffraction order is maximised relative to the residual power in other orders. The optical element may also be a meta-surface planar optic element. In all cases, varying an orientation of an optical element is used to achieve a coarse steering, whilst the electro-optic element achieves fine steering.

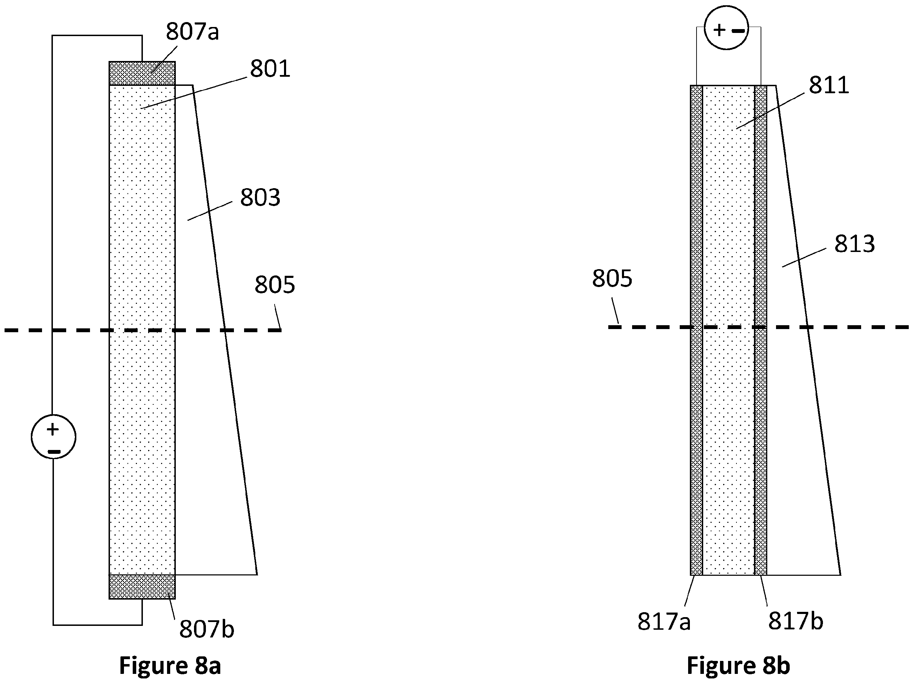

Figures 8a and 8b illustrate a side view of two steering elements, without the housing shown. In both Figures 8a and 8b, the steering elements comprise an electro-optic element layer 801, 811 and an optical element layer 803, 813 in a monolithic structure. In this example, the optical elements 803, 813 are wedge prisms and the electro-optic elements 801, 811 are rectangular in cross-section. The electro-optic elements 801, 811 in both examples are bordered by electrical contacts 807a, 807b, 817a, 817b. Again, these configurations of layered steering elements may be deployed in Risley prism topologies as shown in Figures 6a and 6b. In other examples, the electro-optic elements or layers may be shaped as wedge prisms rather than as rectangular sections, or they may be shaped in other ways designed to meet predetermined FoR requirements.

In the example steering element of Figure 8a, the electrical contacts 807a, 807b are located at the top and bottom edges of the steering element, spanning just the electro-optic portion 801, such than the electric field is applied to the electro-optic portion 801 and not (or at least far less so) to the optical element layer 803.

However, in other examples, the contacts may span the entire set of layered elements. If the optical element has a weak electro-optic response to the applied electric field, and so exhibits a negligible refractive index shift, an incident beam would only be perturbed by a miniscule amount. This may make it worthwhile for the contact to span the entire set of elements if there are beneficial reasons such as ease and/or cost of manufacture or improved structural qualities.

In the exemplary steering element of Figure 8b, the electrical contacts 817a, 187b are placed as layers within the device in a plane substantially perpendicular to the optical axis 805. As discussed previously, indium tin oxides are one example of an optically transmissive, conductive material which could be used such that beam can be steered through the device without significant attenuation (reflection, scattering or absorption). By arranging the contacts 817a, 817b to be placed in this manner, such that there is a smaller distance between them than those 807a, 807b in Figure 8a, the required voltage to produce the desired electric field strength can be lower. However, analogous to the reasoning prescribed to the potential, alternative contact structures in Figure 8a, in other examples the contacts may be located either side of the entire set of layered elements, to realise benefits in ease and/or cost of manufacture, structural integrity or any other reasons.

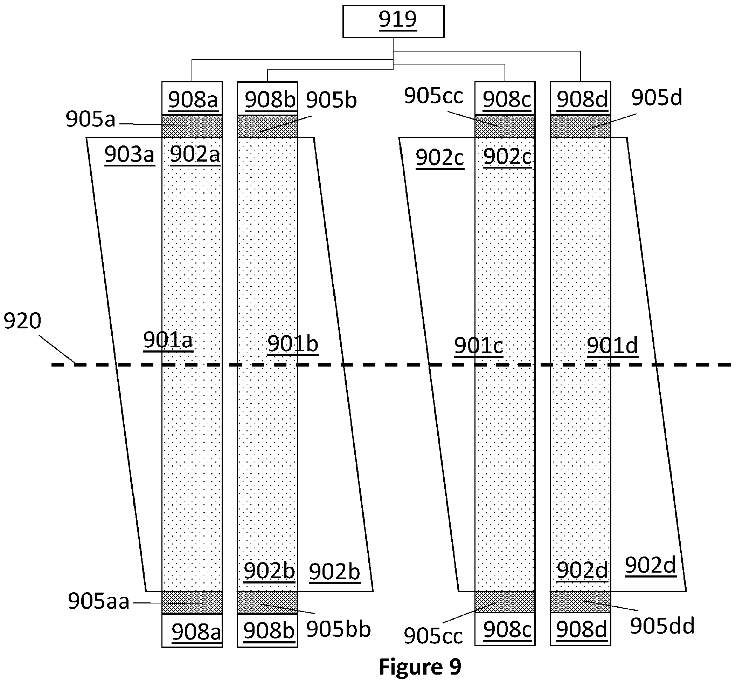

In Figure 9, an exemplary optical arrangement is shown comprising four steering elements 901a-d arranged in a Risley topology, with two sets of Risley pairs, the optical arrangement being operated by a controller 919. Of course, a Risley pair of this kind could be deployed alone rather than with another pair, depending on steering requirements. In any event, each steering element 901a-d comprises an electro-optic element 902a-d and an optical element 903a-d arranged as a two-layered monolithic structure, housed within a rotational mount 908a-d. Each steering element features electrical contacts 905a-d, 905aa-dd to apply an electric field across their respective electro-optic elements 902a-d, thereby altering the refractive index of the electro-optic elements 902a-d. The controller 919 is arranged to independently control the electric field applied to each electro-optic element 902a-d. Each steering element 901a-d is independently housed in a rotation mount 908a-d which allows each steering element 901a-d to be rotated through 360 degrees about its centre in a plane substantially perpendicular to an optical axis of the arrangement 920. The controller 919 is arranged to independently control the rotation of each steering element 901a-d. A slip ring architecture (not pictured) is used to deliver power to the electrical contacts 905a-d, 905aa-dd of each steering element 901a-d (as illustrated in Figure 5), at all orientations of their respective rotation mounts 908a-d. The optical arrangement is capable of coarse steering by rotation and fine steering by variation of electric field.

In some examples, a vehicle may be provided with a pointing unit and/or FSO communications node comprising steering elements according to any of the examples described herein. For example, the FSO communications node may be mounted within the chassis or fuselage of a vehicle. In some examples, the vehicle may be an aircraft, such as an airplane, drone or a high-altitude aircraft. The vehicle may alternatively or additionally be a spacecraft, such as a satellite.

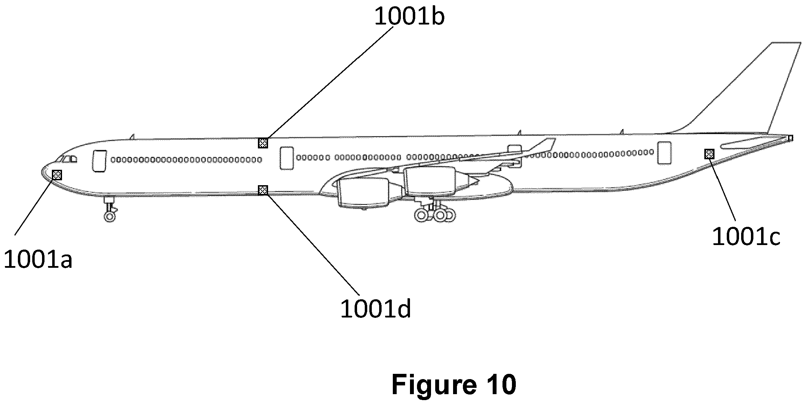

Figure 10 illustrates an example vehicle, in this case an aircraft, with which the example FSO communications nodes described herein may be used. In this example, the aircraft is equipped with four such nodes 1001a-d, located below 1001a the cockpit, above and below 1001b, 1001d the centre fuselage, and on 1001c the rear fuselage of the aircraft, to afford the aircraft an overall FoR in all directions. Providing a vehicle/aircraft/spacecraft with the FSO communications node 121 may allow the vehicle/aircraft/spacecraft to communicate with other vehicles/aircraft/spacecraft and/or ground based units via optical communications. For example, a network of aircraft/spacecraft may be deployed to provide FSO communications over a wide area. The reduced space, weight and/or power provided by examples of the FSO communications node 121 described herein may be of particular benefit in aircraft and spacecraft, particularly in lightweight and/or small aircraft/spacecraft such as drones and/or satellites, where space weight and power budgets are restricted.

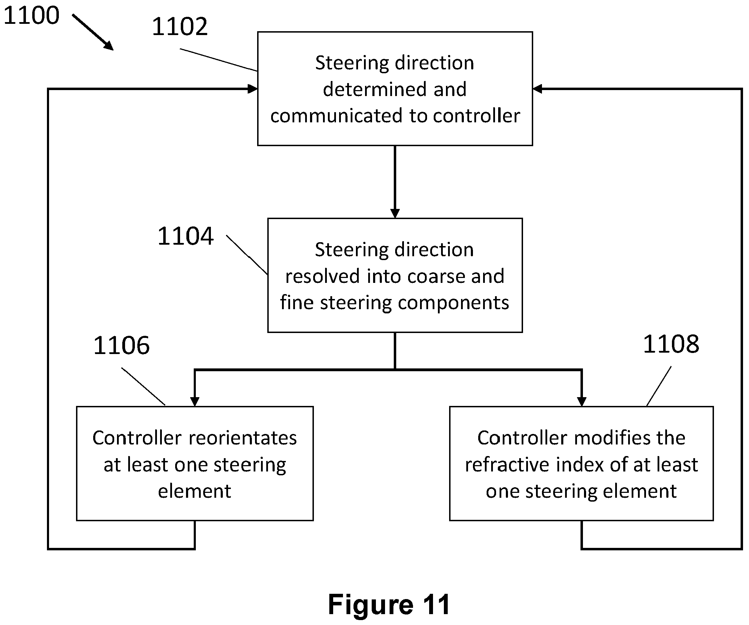

Figure 11 illustrates an example 1100 of operating a pointing unit according to examples herein, for example for nodes on an aircraft according to Figure 10. The example may be performed by the FSO communications node 121 of Figure 1. In a first block 1102, a steering direction is determined, for example by a tracking guidance unit 112, and communicated to a controller 103, to control steering elements 101a, 101b or an optical arrangement 101. The controller 103 resolves the steering direction into a reorientation component (i.e. a coarse steering component for coarse steering), and a refractive index component (i.e. a fine steering component for fine steering), in a second block 1104. According to this example, the resolving uses predetermined geometric transformations/relationships that are known and specific to the make-up of the optical arrangement 101. The geometric transformations may be calculated and/or depend on a stored look-up table of values, for example. In a third block 1106, the controller 103 reorientates at least one steering element 101a and/or 101b according to the reorientation component. In a fourth block 1108, the controller 103 modifies the refractive index of at least one steering element 101a and/or 101b according to the refractive index component. The combination or reorientation and variation of refractive index match the determined steering direction. The coarse steering and fine steering occur concurrently to perform accurate and responsive beam steering according to examples herein. The process repeats in a continuous manner during any communications session. In examples, each steering element 101a and 101b may be a composite structure, for example as illustrated in Figure 7. In such an example, each steering element may be individually reorientated, and the refractive index of its electro-optic layer may be varied, to perform, respectively, coarse and fine steering.

In all examples presented thus far the steering elements have been presented without additional optical layers. However, those skilled in the art will appreciate that they may feature additional layers such as spectral bandpass coatings, anti-reflection coatings, high-reflectance coatings, protective coatings against UV and ionising radiation.

Where electro-optic crystals are described it is to be understood that this refers to materials such as, but not limited to, LiNbO₃, BaTiO₃, SBN75, KTN, KBN, or SCNN

In all examples presented thus far the element responsible for fine steering has been an electro-optic element. However, those skilled in the art will appreciate that this could be replaced by an acousto-optic deflector or similar.

In all references to refractive index it is to be understood that this implicitly refers to the refractive index at a particular wavelength, unless indicated otherwise.

In all examples presented thus far where either the electro-optical element or optical element has been a prism, they have been presented as wedge prisms. However, those skilled in the art will appreciate that this prismatic structure could instead be a compound or composite prism.

The above embodiments are to be understood as illustrative examples of the invention. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A pointing unit for use with a free space optical communications terminal, the pointing unit comprising:
an optical arrangement comprising one or more optically transmissive steering elements arranged in an optical path of an incident beam entering the optical arrangement,
wherein, the optical arrangement is configured so that an orientation of at least one element and a refractive index of at least one element are controllable to steer a beam towards a target.

2. A pointing unit according to claim 1, wherein a steering element having a controllable orientation comprises an electro-optic element, wherein optionally the optical element has a fixed refractive index or effective refractive index.

3. A pointing unit according to claim 2, wherein the steering element is monolithic and wherein the optical element forms a first layer of the steering element and the electro-optic element forms a second layer of the steering element.

4. A pointing unit according to claim 2 or claim 3, wherein the fixed refractive index or effective refractive index is relatively higher than an average refractive index of the electro-optic element.

5. A pointing unit according to any one of claims 2 to 4, wherein the steering element is movably mounted in a support member, wherein, optionally, the support member comprises support electrical contacts arranged to couple to the electro-optic element, and wherein optionally the electro-optic element comprises electrical contacts that are arranged to move with the electro-optic element and remain in electrical contact with the support electrical contacts during movement of the electro-optic element relative to the support member.

6. A pointing unit according to any one of the preceding claims, wherein the optical arrangement has a principal axis that is substantially parallel to an input direction of the incident beam, wherein the orientation of the one or more optically transmissive steering elements is controllable by rotation in a plane that is substantially perpendicular to the principle axis, wherein optionally the optical arrangement comprises at least a first steering element and a second steering element, each steering element being controllable to vary the orientation thereof relative to the pointing unit, and wherein optionally at least one of the first and second steering elements comprises an optical element having a fixed refractive index or effective refractive index and an electro-optic element.

7. A pointing unit according to claim 6 when the pointing unit comprises at least a first steering element and a second steering element, wherein each of the first and second steering elements comprises an optical element having a fixed refractive index or effective refractive index and an electro-optic element.

8. A pointing unit according to any one of the preceding claims, wherein a coarse steering of the beam is achieved by varying the orientation of at least one steering element of the optical arrangement.

9. A pointing unit according to any one of the preceding claims, wherein fine steering of the beam is achieved by varying the refractive index of at least one steering element of the optical arrangement.

10. A pointing unit for use with a free space optical communications terminal, the pointing unit comprising:
an optical arrangement to steer an incident beam towards a target, the optical arrangement comprising at least a first steering element and a second steering element, at least one of the steering elements comprising an optical element having a fixed refractive index or effective refractive index and an electro-optic element having a refractive index that can be varied by varying an electric field applied thereto, each steering element being movably mounted in a respective support member and arranged in an optical path of an incident beam entering the optical arrangement in a forward direction; and
a controller arranged to vary an orientation of each steering element relative to its respective support member to perform coarse steering of the incident beam and to vary an electric field applied to the or each electro-optic element, to vary the respective refractive index or indices thereof, to perform fine steering of the incident beam.

11. A pointing unit according to any one of claims 6 to 10 when the pointing unit comprises at least a first steering element and a second steering element, wherein the first and second optical steering elements are arranged as a Risley prism pair.

12. A pointing unit according to any one of the preceding claims, comprising a controller to control an orientation of at least one element and a refractive index of at least one element to steer a beam towards a target, and optionally comprising a guidance unit coupled to the controller and responsive to an optical signal received via the optical arrangement to cause the controller to vary an orientation of at least one element and/or a refractive index of at least one element to steer the incident beam towards the target.

13. A pointing unit according to any one of the preceding claims, wherein the optical arrangement comprises a beam expander at an optical terminal, arranged to expand the beam diameter in the transmit direction and reduce the beam diameter in the receive direction, wherein, optionally, the beam expander comprises a telescope arrangement.

14. A vehicle comprising the pointing unit of any one claim 1 to 13, wherein, optionally, the vehicle is an aircraft.

15. A method of steering a beam towards a target, comprising:
determining a steering direction of a beam; and
controlling an optical arrangement to steer the beam, comprising controlling an orientation of at least one element of the optical arrangement and a refractive index of at least one element of the optical arrangement to steer a beam towards a target
